# EUROPEAN PATENT APPLICATION

(11) **EP 4 280 087 A1**
(43) Date of publication of application: **22.11.2023**
(21) Application number: 23173380.9
(22) Date of filing: 15.05.2023
(51) Int. Cl.: G06F 16/958

(54) **HIERARCHICAL MULTI-MODEL GENERATION IN NETWORK AND CLOUD COMPUTING SYSTEMS**

(30) Priority: 16.05.2022 US 202217663464
(71) Applicant: Juniper Networks, Inc., Sunnyvale, CA 94089 (US)
(72) Inventor: JADON, Shruti, Sunnyvale, 94089 (US); PATANKAR, Ajit Krishna, Sunnyvale, 94089 (US)
(74) Representative: D Young & Co LLP

(57) **Abstract**

A device may receive site data identifying raw data or key performance indicators associated with a plurality of sites, and may calculate a similarity score matrix based on the site data. The device may group the site data into data clusters based on the similarity score matrix, and may identify training data and validation data based on the data clusters. The device may generate a meta model, and may train the meta model based on the training data. The device may validate the meta model based on the validation data, and may create site-specific models, for each of the plurality of sites, based on the meta model and the site data. The device may utilize the site-specific models with corresponding new site data of the plurality of sites to generate predictions for the plurality of sites.

## Description

### BACKGROUND

A site may include server devices, network devices, data storage devices, and/or the like that provide a data center and/or a cloud computing environment for users. The site may provide different services (e.g., data storage, web-based applications, email applications, and/or the like) to the users.

### SUMMARY

Particular embodiments are set out in the independent claims. Various optional examples are set out in the dependent claims. Some implementations described herein relate to a method. The method may include receiving site data identifying raw data or key performance indicators associated with a plurality of sites, and calculating a similarity score matrix based on the site data. The method may include grouping the site data into data clusters based on the similarity score matrix, and identifying training data and validation data based on the data clusters. The method may include generating a meta model, and training the meta model based on the training data. The method may include validating the meta model based on the validation data, and creating site-specific models, for each of the plurality of sites, based on the meta model and the site data. The method may include utilizing the site-specific models with corresponding new site data of the plurality of sites to generate predictions for the plurality of sites.

Some implementations described herein relate to a device. The device may include one or more memories and one or more processors. The one or more processors may be configured to receive site data identifying raw data or key performance indicators associated with a plurality of sites, and calculate a similarity score matrix based on the site data. The one or more processors may be configured to group the site data into data clusters based on the similarity score matrix, and identify training data and validation data based on the data clusters. The one or more processors may be configured to generate a meta model, and train the meta model based on the training data. The one or more processors may be configured to validate the meta model based on the validation data, and create site-specific models, for each of the plurality of sites, based on the meta model and the site data. The one or more processors may be configured to utilize the site-specific models with corresponding new site data of the plurality of sites to generate predictions for the plurality of sites.

Some implementations described herein relate to a non-transitory computer-readable medium that stores a set of instructions for a device. The set of instructions, when executed by one or more processors of the device, may cause the device to receive site data identifying raw data or key performance indicators associated with a plurality of sites, and calculate a similarity score matrix based on the site data. The set of instructions, when executed by one or more processors of the device, may cause the device to group the site data into data clusters based on the similarity score matrix, and identify training data based on the data clusters. The set of instructions, when executed by one or more processors of the device, may cause the device to generate a meta model, and train the meta model based on the training data. The set of instructions, when executed by one or more processors of the device, may cause the device to create site-specific models, for each of the plurality of sites, based on the meta model and the site data, and utilize the site-specific models with corresponding new site data of the plurality of sites to generate predictions for the plurality of sites.

### BRIEF DESCRIPTION OF THE DRAWINGS

Figs. 1A-1H are diagrams of an example associated with hierarchical multi-model generation in network and cloud computing systems.
Fig. 2 is a diagram of an example environment in which systems and/or methods described herein may be implemented.
Fig. 3 is a diagram of example components of one or more devices of Fig. 2.
Fig. 4 is a flowchart of an example process for hierarchical multi-model generation in network and cloud computing systems.

### DETAILED DESCRIPTION

The following detailed description of example implementations refers to the accompanying drawings. The same reference numbers in different drawings may identify the same or similar elements.

Utilization of a site may generate raw telemetry data and/or key performance indicators (KPIs). The raw telemetry data and/or KPIs may be monitored to determine whether the site is functioning correctly, to generate forecasts associated with the site, to detect anomalies associated with the site, and/or the like. However, when a new site is added, the availability of raw telemetry data and KPIs is limited. This makes determination of whether the new site is functioning correctly, generation of forecasts associated with the new site, detection of anomalies associated with the new site, and/or the like difficult. Thus, current techniques for monitoring a new site consume computing resources (e.g., processing resources, memory resources, communication resources, and/or the like), networking resources, and/or the like, associated with operating a new site that is malfunctioning, discovering that the new site is malfunctioning, correcting anomalies in the malfunctioning new site, handling customer complaints associated with the malfunctioning new site, gathering data for training a forecasting model for the new site, training the forecasting model for the new site, and/or the like.

Some implementations described herein relate to a model generation system that provides hierarchical multi-model generation in network and cloud computing systems (e.g., sites). For example, the model generation system may receive site data identifying raw data or KPIs associated with a plurality of sites, and may calculate a similarity score matrix based on the site data. The model generation system may group the site data into data clusters based on the similarity score matrix, and may identify training data and validation data based on the data clusters. The model generation system may generate a meta model, and may train the meta model based on the training data. The model generation system may validate the meta model based on the validation data, and may create site-specific models, for each of the plurality of sites, based on the meta model and the site data. The model generation system may utilize the site-specific models with corresponding new site data of the plurality of sites to generate predictions for the plurality of sites.

In this way, the model generation system provides hierarchical multi-model generation in network and cloud computing systems. For example, the model generation system may generate forecasts for a new site and may optimize a model training procedure based on a telemetry enhanced model agnostic meta learning approach. The model generation system may learn specific features across multiple existing sites, and may utilize the specific features to generate forecasts and/or detect anomalies associated with the new site as soon as the new site is implemented. The model generation system may significantly reduce training time for a forecasting model that generates forecasts associated with the new site, and may fine-tune the forecasting model more quickly than current techniques. The model generation system may also significantly reduce data gathering requirements for the forecasting model of the new site, compared to current techniques. Thus, the model generation system conserves computing resources, networking resources, and/or the like that would otherwise have been consumed by operating a new site that is malfunctioning, discovering that the new site is malfunctioning, correcting anomalies in the malfunctioning new site, handling customer complaints associated with the malfunctioning new site, gathering data for training a forecasting model for the new site, training the forecasting model for the new site, and/or the like.

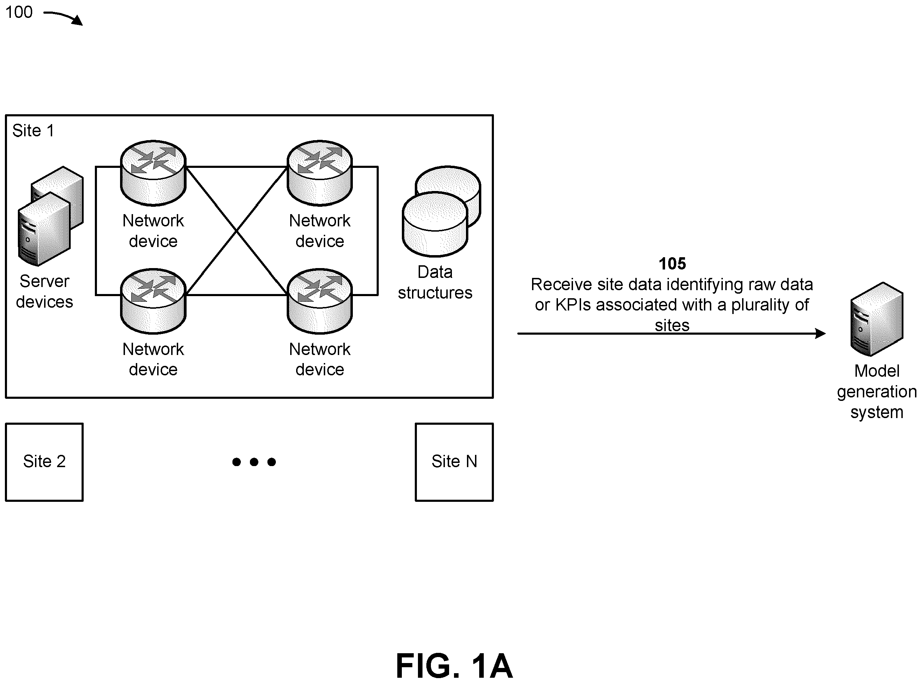

Figs. 1A-1H are diagrams of an example 100 associated with hierarchical multi-model generation in network and cloud computing systems. As shown in Figs. 1A-1H, example 100 includes a model generation system associated with a plurality of sites (e.g., site 1 through site N) that each include one or more server devices, one or more network devices, one or more data structures, and/or the like. In some implementations, the one or more server devices, network devices, data structures, and/or the like may be utilized to generate one or more virtual machines. Further details of the model generation system, the server devices, the network devices, and the data structures are provided elsewhere herein.

As shown in Fig. 1A, and by reference number 105, the model generation system may receive site data identifying raw data or KPIs associated with the plurality of sites. For example, the plurality of sites may periodically generate the site data, may continuously generate the site data, may generate the site data based upon a request from the model generation system, and/or the like. The model generation system may periodically receive the site data from the plurality of sites, may continuously receive the site data from the plurality of sites, may receive the site data from the plurality of sites based upon a request, and/or the like.

In some implementations, the site data may include raw data identifying communications between the one or more server devices, network devices, data structures, virtual machines, and/or the like; inputs for the one or more server devices, network devices, data structures, virtual machines, and/or the like; outputs of the one or more server devices, network devices, data structures, virtual machines, and/or the like; etc.

In some implementations, the site data may include measurements or KPIs associated with the raw data (e.g., over a time period). The measurements may include events (e.g., connections, traffic transmission, traffic reception, and/or the like) recorded by performance counters associated with the one or more server devices, network devices, data structures, virtual machines, and/or the like. The KPIs may be calculated based on the measurements (e.g., the recorded events). The KPIs may include bandwidths, throughputs, signal strengths, availability indicators (e.g., percentages of time that the one or more server devices, network devices, data structures, virtual machines, and/or the like are providing services), network resource indicators (e.g., traffic and control channels provided by the network devices), voice service indicators, data service indicators, and/or the like. In some implementations, the model generation system may receive the raw data from the plurality of sites, and may calculate the KPIs based on the raw data.

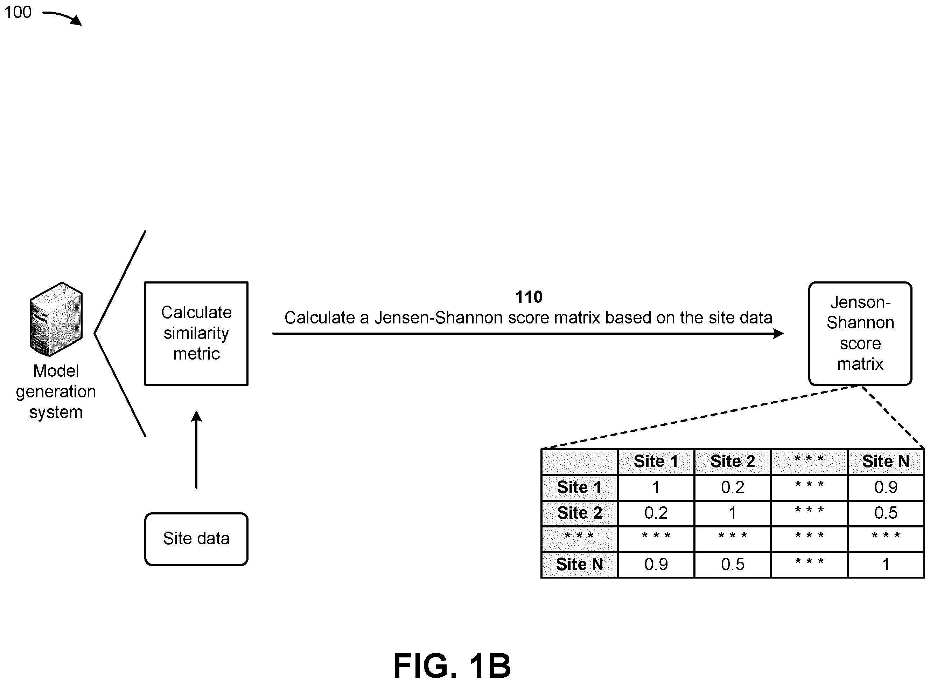

As shown in Fig. 1B, and by reference number 110, the model generation system may calculate a Jensen-Shannon score matrix based on the site data. For example, the model generation system may utilize a Jensen-Shannon divergence method to determine which of the plurality of sites have similar data distributions based on the site data. The Jensen-Shannon divergence method is a method of measuring a similarity between two probability distributions, and may also be known as an information radius or a total divergence to an average. In some implementations, the model generation system may utilize the site data to calculate the Jensen-Shannon score matrix that depicts similarity scores between the site data of the plurality of sites. As shown in Fig. 1B, the Jensen-Shannon score matrix may indicate that the site data from sites 1 and 2 have a 20% (e.g., a 0.2 score) similarity, that the site data from sites 1 and *N* have a 90% (e.g., a 0.9 score) similarity, that the site data from sites 2 and *N* have a 50% (e.g., a 0.5 score) similarity, and/or the like. In some implementations, the model generation system may utilize other methods of measuring similarity between the site data of the plurality of sites, such as, for example, a Kullback-Leibler divergence method.

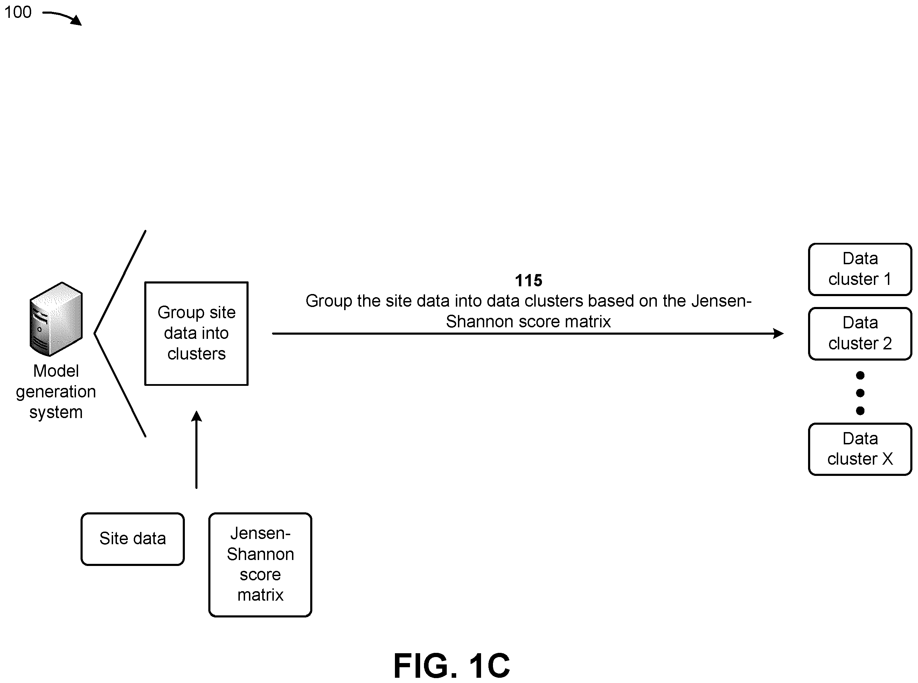

As shown in Fig. 1C, and by reference number 115, the model generation system may group the site data into data clusters based on the scores of the Jensen-Shannon score matrix. For example, the model generation system may utilize the scores of the Jensen-Shannon score matrix to group similar site data into data clusters by taking one of the plurality of sites as a base. As further shown in Fig. 1C, the model generation system may group the site data into a first data cluster (e.g., data cluster 1), a second data cluster (e.g., data cluster 2), ..., and an *X* data cluster (e.g., data cluster *X*). In some implementations, if the model generation system takes the first site (e.g., site 1), of the plurality of sites, as the base, the model generation system may group, into a data cluster, the site data associated with the *N*th site (e.g., site N) with the site data associated with the first site, since the site data from sites 1 and *N* have a 90% similarity. The model generation system may not group, into a data cluster, the site data associated with the second site (e.g., site 2) with the site data associated with the first site since the site data from sites 1 and 2 only have a 20% similarity. The model generation system may or may not group, into a data cluster, the site data associated with the second site (e.g., site 2) with the site data associated with the Nth site since the site data from sites 2 and *N* have a 50% similarity. In some implementations, the model generation system may utilize a similarity threshold (e.g., greater than 50%, 60%, and/or the like) when determining whether to group the site data associated with the plurality of sites into a data cluster. In some implementations, the groups of data clusters may include hierarchical groups of data clusters, where the hierarchy is based on the scores of the Jensen-Shannon score matrix.

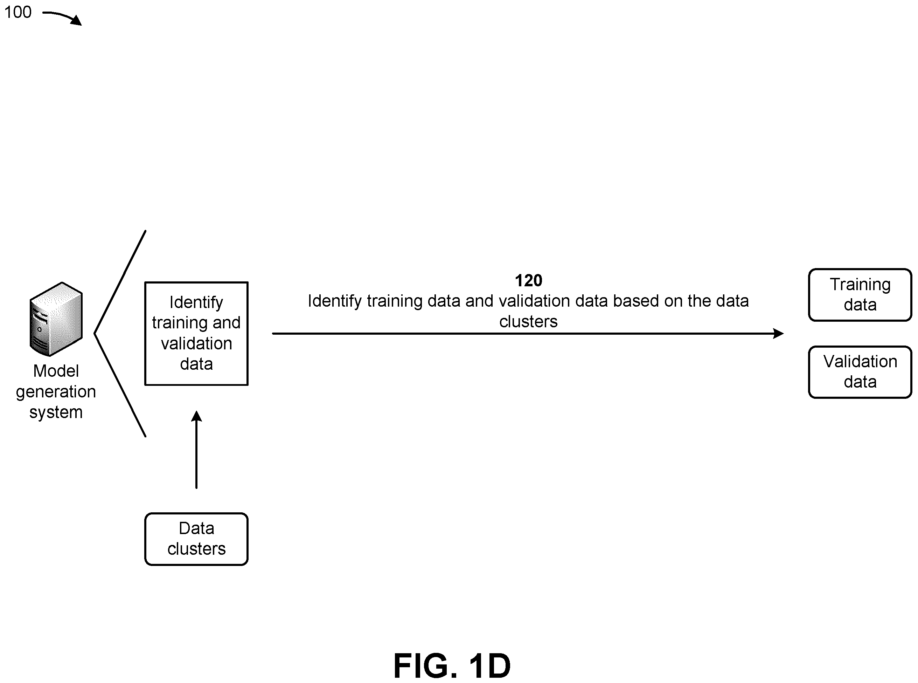

As shown in Fig. 1D, and by reference number 120, the model generation system may identify training data and validation data based on the data clusters. For example, the model generation system may divide the data clusters into a first portion of the data clusters and a second portion of the data clusters. The first portion and the second portion may include a same quantity of the data clusters, different quantities of the data clusters, and/or the like. In some implementations, more of the data clusters may be allotted to the first portion of the data clusters since the first portion may be utilized to generate the training data. The model generation system may generate the training data based on the first portion of the data clusters. The model generation system may generate the validation data based on the second portion of the data clusters. In other implementations, the model generation system may utilize different portions of the data clusters to generate the training data and/or the validation data.

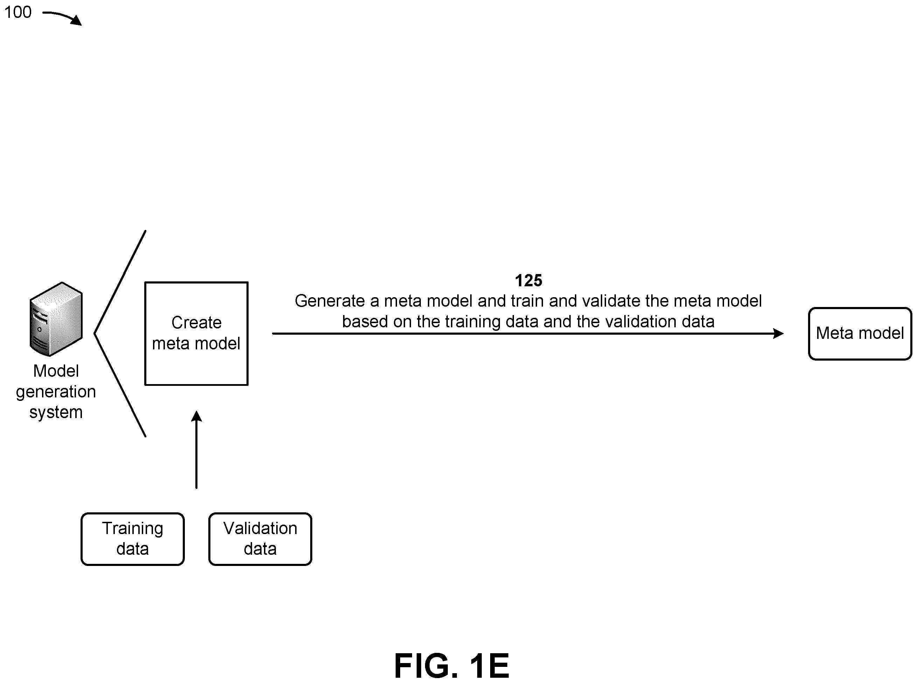

As shown in Fig. 1E, and by reference number 125, the model generation system may generate a meta model and may train and validate the meta model based on the training data and the validation data, respectively. For example, the model generation system may generate the meta model to predict generalized site-specific weights that may be fine-tuned to create site-specific models without a large quantity of data. The meta model may include a neural network model that learns what to learn from site data. In some implementations, the model generation system may utilize a model agnostic meta learning (MAML) model to train a meta model based on the training data and/or the validation data. Since the meta model is a neural network model, the MAML model may optimize an objective function of the meta model and may generate weight parameters of the meta model. For this, the MAML model may determine a perfect loss function, which is a mathematical function that can convey what is to be achieved. The MAML model may utilize the perfect loss function for optimization and learning satisfactory parameters for the meta model.

Training the meta model with the MAML model is different than general machine learning model training. In training the meta model, the MAML model may sample site-specific data from multiple similar distributions of the site. The outcome of this sampling is known as a support set. The MAML model may utilize the support set to train the meta model based on creating site-specific models and calculating loss. The MAML model may utilize the calculated loss to learn gradients and to update the meta model based on the gradients. The process of creating site-specific models during training of the meta model may enable creation of models that can learn with lesser quantities of data. In some implementations, the MAML model may include the following syntax:

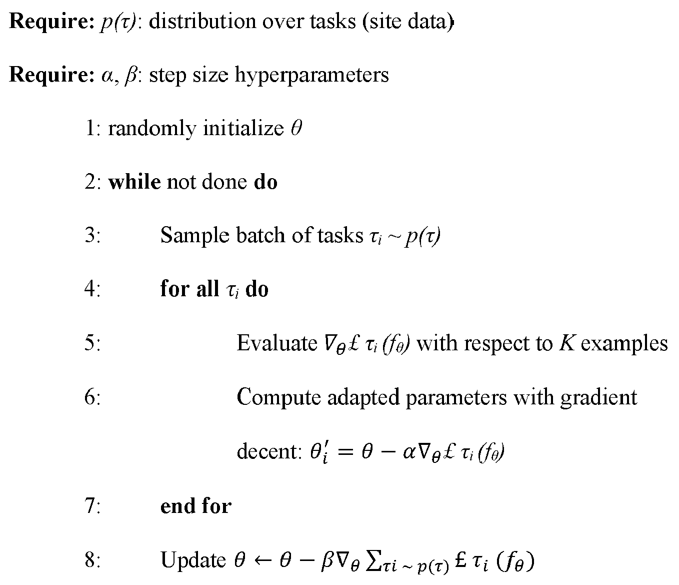

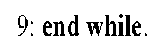

In some implementations, the model generation system may train the meta model with the training data to generate a trained meta model. In some implementations, rather than training the meta model, the model generation system may obtain the trained meta model from another system or device that trained the meta model. In this case, the model generation system may provide the other system or device with the training data and/or the validation data for use in training the meta model, and may provide the other system or device with updated training data and/or updated validation data to retrain the meta model in order to update the meta model.

In some implementations, the model generation system may train the meta model with the training data to generate the trained meta model, and may process the validation data, with the trained meta model, to validate that the trained meta model is operating correctly. A trained meta model can be said to be operating correctly if it has adequate accuracy, has adequate precision, has adequate recall, is not subject to excessive overFitting, and/or the like. If the trained meta model is operating excessively incorrectly, the model generation system may modify the trained meta model and may revalidate the modified meta model based on the validation data.

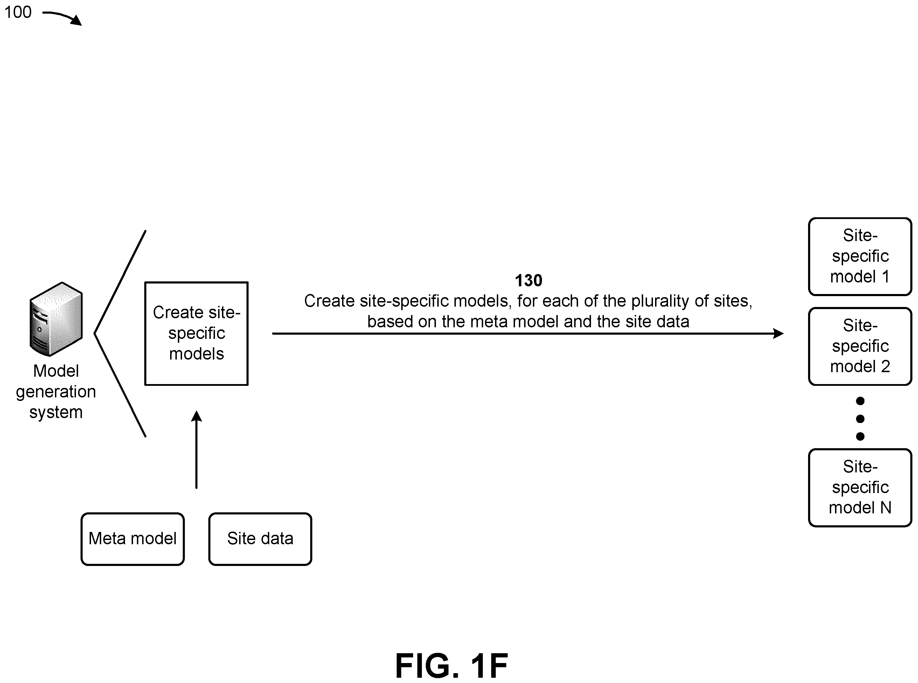

As shown in Fig. 1F, and by reference number 130, the model generation system may create site-specific models, for each of the plurality of sites, based on the meta model and the site data. For example, after training and validating the meta model, the model generation system may create a base model (e.g., a generic model) from the trained and validated meta model. The model generation system may utilize the site data for each of the plurality of sites to fine-tune the base model and to generate a site-specific model for each of the plurality of sites. In some implementations, fine-tuning the base model with the site data may cause the base model to learn intricacies of the site data and to make accurate predictions tailored to each of the plurality of sites.

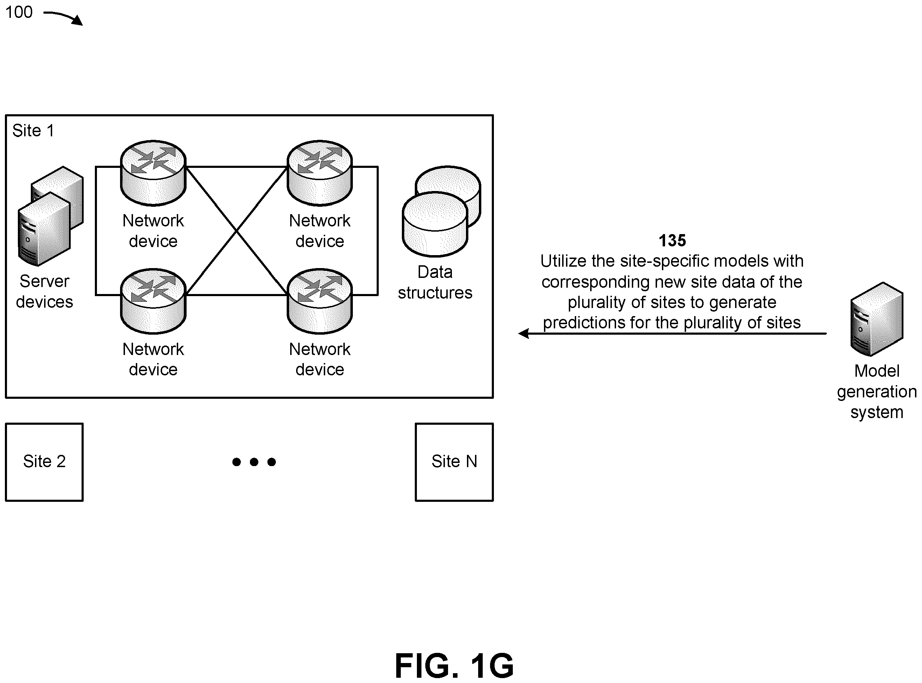

As shown in Fig. 1G, and by reference number 135, the model generation system may utilize the site-specific models with corresponding new site data of the plurality of sites to generate predictions for the plurality of sites. For example, the model generation system may provide the site-specific models to network administrative devices associated with each of the plurality of sites. The network administrative devices may receive the new site data from the plurality of sites and may process the new site data of the plurality of sites, with the site-specific models, to generate the predictions for the plurality of sites. Alternatively, or additionally, the model generation system may receive the new site data from the plurality of sites and may process the new site data of the plurality of sites, with the site-specific models, to generate the predictions for the plurality of sites. In some implementations, the predictions for the plurality of sites may include predictions of issues associated with the one or more server devices, network devices, data structures, virtual machines, and/or the like of the plurality of sites, predictions of throughputs associated with the one or more server devices, network devices, data structures, virtual machines, and/or the like of the plurality of sites, predictions of outputs associated with the one or more server devices, network devices, data structures, virtual machines, and/or the like of the plurality of sites, and/or the like.

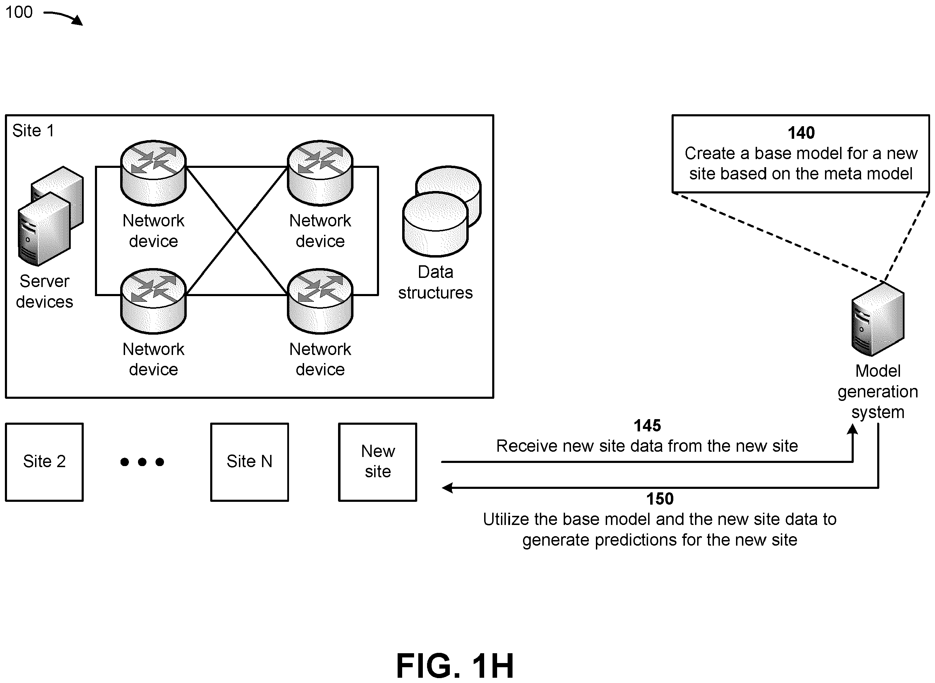

As shown in Fig. 1H, and by reference number 140, the model generation system may create a base model for a new site based on the meta model. For example, after training and validating the meta model, the model generation system may create, for the new site, a base model (e.g., a generic model) from the trained and validated meta model. In some implementations, the model generation system may utilize the site data for one or more of the plurality of sites to fine-tune the base model and to generate a site-specific model for the new site. In some implementations, fine-tuning the base model with the site data may cause the base model to learn intricacies of the site data and to make accurate predictions tailored to the new site.

As further shown in Fig. 1H, and by reference number 145, the model generation system may receive new site data from the new site. For example, the new site may include one or more server devices, network devices, data structures, virtual machines, and/or the like. The new site may periodically generate the new site data, may continuously generate the new site data, may generate the new site data based upon a request from the model generation system, and/or the like. The model generation system may periodically receive the new site data from the new site, may continuously receive the new site data from the new site, may receive the new site data from the new site based upon a request, and/or the like. In some implementations, the base model for the new site may be implemented in a network administrative device associated with the new site. In such implementations, the network administrative device may periodically receive the new site data from the new site, may continuously receive the new site data from the new site, may receive the new site data from the new site based upon a request, and/or the like.

As further shown in Fig. 1H, and by reference number 150, the model generation system may utilize the base model and the new site data to generate predictions for the new site. For example, the network administrative device of the new site may process the new site data, with the base model, to generate the predictions for the new site. Alternatively, or additionally, the model generation system may receive the new site data from the new site and may process the new site data, with the base model, to generate the predictions for the new site. In some implementations, the predictions for the new site may include predictions of issues associated with the one or more server devices, network devices, data structures, virtual machines, and/or the like of the new site, predictions of throughputs associated with the one or more server devices, network devices, data structures, virtual machines, and/or the like of the new site, predictions of outputs associated with the one or more server devices, network devices, data structures, virtual machines, and/or the like of the new site, and/or the like.

In this way, the model generation system provides hierarchical multi-model generation in network and cloud computing systems. For example, the model generation system may generate forecasts for a new site and may optimize a model training procedure based on a telemetry enhanced model agnostic meta learning approach. The model generation system may learn specific features across multiple existing sites, and may utilize the specific features to generate forecasts and/or detect anomalies associated with the new site as soon as the new site is implemented. The model generation system may significantly reduce training time for a forecasting model that generates forecasts associated with the new site, and may fine-tune the forecasting model more quickly than current techniques. The model generation system may also significantly reduce data gathering requirements for the forecasting model of the new site compared to current techniques. Thus, the model generation system conserves computing resources, networking resources, and/or the like that would otherwise have been consumed by operating a new site that is malfunctioning, discovering that the new site is malfunctioning, correcting anomalies in the malfunctioning new site, handling customer complaints associated with the malfunctioning new site, gathering data for training a forecasting model for the new site, training the forecasting model for the new site, and/or the like.

As indicated above, Figs. 1A-1H are provided as an example. Other examples may differ from what is described with regard to Figs. 1A-1H. The number and arrangement of devices shown in Figs. 1A-1H are provided as an example. In practice, there may be additional devices, fewer devices, different devices, or differently arranged devices than those shown in Figs. 1A-1H. Furthermore, two or more devices shown in Figs. 1A-1H may be implemented within a single device, or a single device shown in Figs. 1A-1H may be implemented as multiple, distributed devices. Additionally, or alternatively, a set of devices (e.g., one or more devices) shown in Figs. 1A-1H may perform one or more functions described as being performed by another set of devices shown in Figs. 1A-1H.

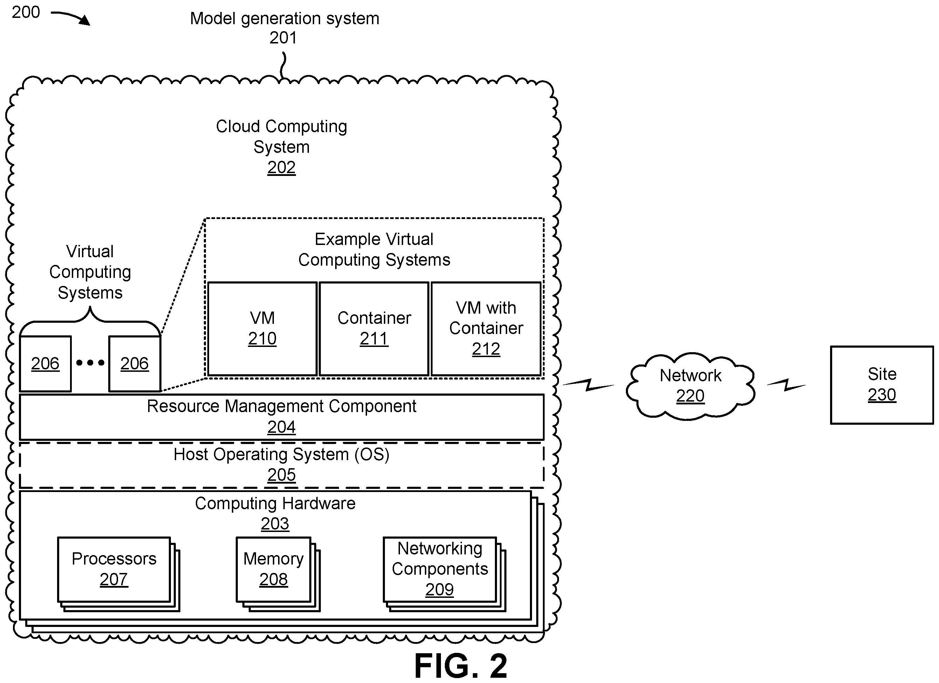

Fig. 2 is a diagram of an example environment 200 in which systems and/or methods described herein may be implemented. As shown in Fig. 2, environment 200 may include a model generation system 201, which may include one or more elements of and/or may execute within a cloud computing system 202. The cloud computing system 202 may include one or more elements 203-212, as described in more detail below. As further shown in Fig. 2, environment 200 may include a network 220 and/or a site 230. Devices and/or elements of environment 200 may interconnect via wired connections and/or wireless connections.

The cloud computing system 202 includes computing hardware 203, a resource management component 204, a host operating system (OS) 205, and/or one or more virtual computing systems 206. The cloud computing system 202 may execute on, for example, an Amazon Web Services platform, a Microsoft Azure platform, or a Snowflake platform. The resource management component 204 may perform virtualization (e.g., abstraction) of computing hardware 203 to create the one or more virtual computing systems 206. Using virtualization, the resource management component 204 enables a single computing device (e.g., a computer or a server) to operate like multiple computing devices, such as by creating multiple isolated virtual computing systems 206 from computing hardware 203 of the single computing device. In this way, computing hardware 203 can operate more efficiently, with lower power consumption, higher reliability, higher availability, higher utilization, greater flexibility, and lower cost than using separate computing devices.

Computing hardware 203 includes hardware and corresponding resources from one or more computing devices. For example, computing hardware 203 may include hardware from a single computing device (e.g., a single server) or from multiple computing devices (e.g., multiple servers), such as multiple computing devices in one or more data centers. As shown, computing hardware 203 may include one or more processors 207, one or more memories 208, and/or one or more networking components 209. Examples of a processor, a memory, and a networking component (e.g., a communication component) are described elsewhere herein.

The resource management component 204 includes a virtualization application (e.g., executing on hardware, such as computing hardware 203) capable of virtualizing computing hardware 203 to start, stop, and/or manage one or more virtual computing systems 206. For example, the resource management component 204 may include a hypervisor (e.g., a bare-metal or Type 1 hypervisor, a hosted or Type 2 hypervisor, or another type of hypervisor) or a virtual machine monitor, such as when the virtual computing systems 206 are virtual machines 210. Additionally, or alternatively, the resource management component 204 may include a container manager, such as when the virtual computing systems 206 are containers 211. In some implementations, the resource management component 204 executes within and/or in coordination with a host operating system 205.

A virtual computing system 206 includes a virtual environment that enables cloud-based execution of operations and/or processes described herein using computing hardware 203. As shown, a virtual computing system 206 may include a virtual machine 210, a container 211, or a hybrid environment 212 that includes a virtual machine and a container, among other examples. A virtual computing system 206 may execute one or more applications using a file system that includes binary files, software libraries, and/or other resources required to execute applications on a guest operating system (e.g., within the virtual computing system 206) or the host operating system 205.

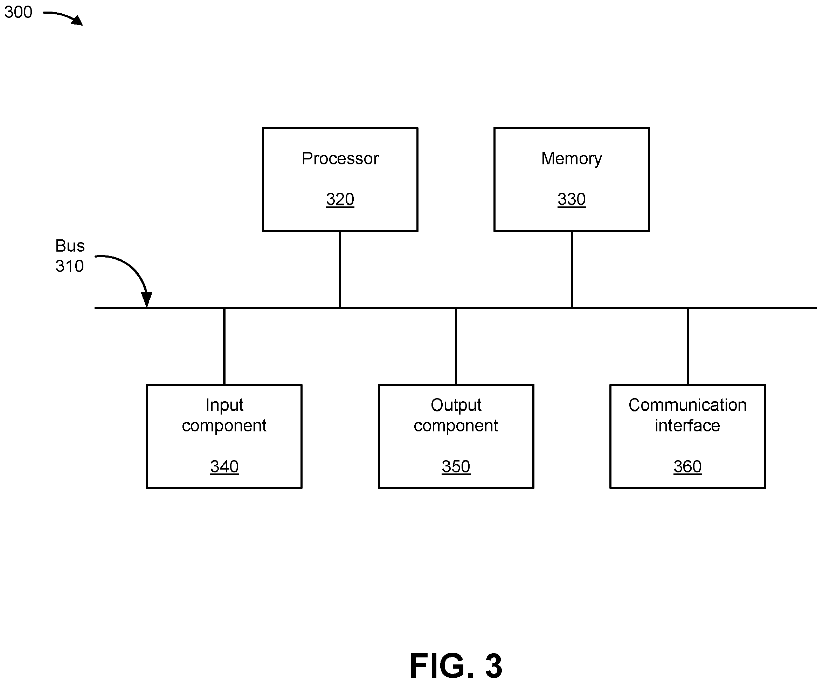

Although the model generation system 201 may include one or more elements 203-212 of the cloud computing system 202, may execute within the cloud computing system 202, and/or may be hosted within the cloud computing system 202, in some implementations, the model generation system 201 may not be cloud-based (e.g., may be implemented outside of a cloud computing system) or may be partially cloud-based. For example, the model generation system 201 may include one or more devices that are not part of the cloud computing system 202, such as device 300 of Fig. 3, which may include a standalone server or another type of computing device. The model generation system 201 may perform one or more operations and/or processes described in more detail elsewhere herein.

Network 220 includes one or more wired and/or wireless networks. For example, network 220 may include a cellular network, a public land mobile network (PLMN), a local area network (LAN), a wide area network (WAN), a private network, the Internet, and/or a combination of these or other types of networks. The network 220 enables communication among the devices of environment 200.

The site 230 may include one or more server devices, one or more data structures, one or more network devices, and/or the like. Each of the server devices includes one or more devices capable of receiving, generating, storing, processing, providing, and/or routing information, as described elsewhere herein. Each of the server devices may include a communication device and/or a computing device. For example, each of the server devices may include a server, such as an application server, a client server, a web server, a database server, a host server, a proxy server, a virtual server (e.g., executing on computing hardware), or a server in a cloud computing system. In some implementations, each of the server devices includes computing hardware used in a cloud computing environment.

Each of the data structures includes one or more devices capable of receiving, generating, storing, processing, and/or providing information, as described elsewhere herein. Each of the data structures may include a communication device and/or a computing device. For example, each of the data structures may include a database, a server, a database server, an application server, a client server, a web server, a host server, a proxy server, a virtual server (e.g., executing on computing hardware), a server in a cloud computing system, a device that includes computing hardware used in a cloud computing environment, or a similar type of device. Each of the data structures may communicate with one or more other devices of the environment 200, as described elsewhere herein.

Each of the network devices includes one or more devices capable of receiving, processing, storing, routing, and/or providing traffic (e.g., a packet and/or other information or metadata) in a manner described herein. For example, each of the network devices may include a router, such as a label switching router (LSR), a label edge router (LER), an ingress router, an egress router, a provider router (e.g., a provider edge router or a provider core router), a virtual router, or another type of router. Additionally, or alternatively, each of the network devices may include a gateway, a switch, a firewall, a hub, a bridge, a reverse proxy, a server (e.g., a proxy server, a cloud server, or a data center server), a load balancer, and/or a similar device. In some implementations, each of the network devices may be a physical device implemented within a housing, such as a chassis. In some implementations, each of the network devices may be a virtual device implemented by one or more computing devices of a cloud computing environment or a data center. In some implementations, a group of network devices may be a group of data center nodes that are used to route traffic flow through a network.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

Fig. 3 is a diagram of example components of one or more devices of Fig. 2. The example components may be included in a device 300, which may correspond to the model generation system 201 and/or the site 230. In some implementations, the model generation system 201 and/or the site 230 may include one or more devices 300 and/or one or more components of the device 300. As shown in Fig. 3, the device 300 may include a bus 310, a processor 320, a memory 330, an input component 340, an output component 350, and a communication interface 360.

The bus 310 includes one or more components that enable wired and/or wireless communication among the components of the device 300. The bus 310 may couple together two or more components of Fig. 3, such as via operative coupling, communicative coupling, electronic coupling, and/or electric coupling. The processor 320 includes a central processing unit, a graphics processing unit, a microprocessor, a controller, a microcontroller, a digital signal processor, a field-programmable gate array, an application-specific integrated circuit, and/or another type of processing component. The processor 320 is implemented in hardware, firmware, or a combination of hardware and software. In some implementations, the processor 320 includes one or more processors capable of being programmed to perform one or more operations or processes described elsewhere herein.

The memory 330 includes volatile and/or nonvolatile memory. For example, the memory 330 may include random access memory (RAM), read only memory (ROM), a hard disk drive, and/or another type of memory (e.g., a flash memory, a magnetic memory, and/or an optical memory). The memory 330 may include internal memory (e.g., RAM, ROM, or a hard disk drive) and/or removable memory (e.g., removable via a universal serial bus connection). The memory 330 may be a non-transitory computer-readable medium. The memory 330 stores information, instructions, and/or software (e.g., one or more software applications) related to the operation of the device 300. In some implementations, the memory 330 includes one or more memories that are coupled to one or more processors (e.g., the processor 320), such as via the bus 310.

The input component 340 enables the device 300 to receive input, such as user input and/or sensed input. For example, the input component 340 may include a touch screen, a keyboard, a keypad, a mouse, a button, a microphone, a switch, a sensor, a global positioning system sensor, an accelerometer, a gyroscope, and/or an actuator. The output component 350 enables the device 300 to provide output, such as via a display, a speaker, and/or a light-emitting diode. The communication interface 360 enables the device 300 to communicate with other devices via a wired connection and/or a wireless connection. For example, the communication interface 360 may include a receiver, a transmitter, a transceiver, a modem, a network interface card, and/or an antenna.

The device 300 may perform one or more operations or processes described herein. For example, a non-transitory computer-readable medium (e.g., the memory 330) may store a set of instructions (e.g., one or more instructions or code) for execution by the processor 320. The processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry may be used instead of or in combination with the instructions to perform one or more operations or processes described herein. Additionally, or alternatively, the processor 320 may be configured to perform one or more operations or processes described herein. Thus, implementations described herein are not limited to any specific combination of hardware circuitry and software.

The number and arrangement of components shown in Fig. 3 are provided as an example. The device 300 may include additional components, fewer components, different components, or differently arranged components than those shown in Fig. 3. Additionally, or alternatively, a set of components (e.g., one or more components) of the device 300 may perform one or more functions described as being performed by another set of components of the device 300.

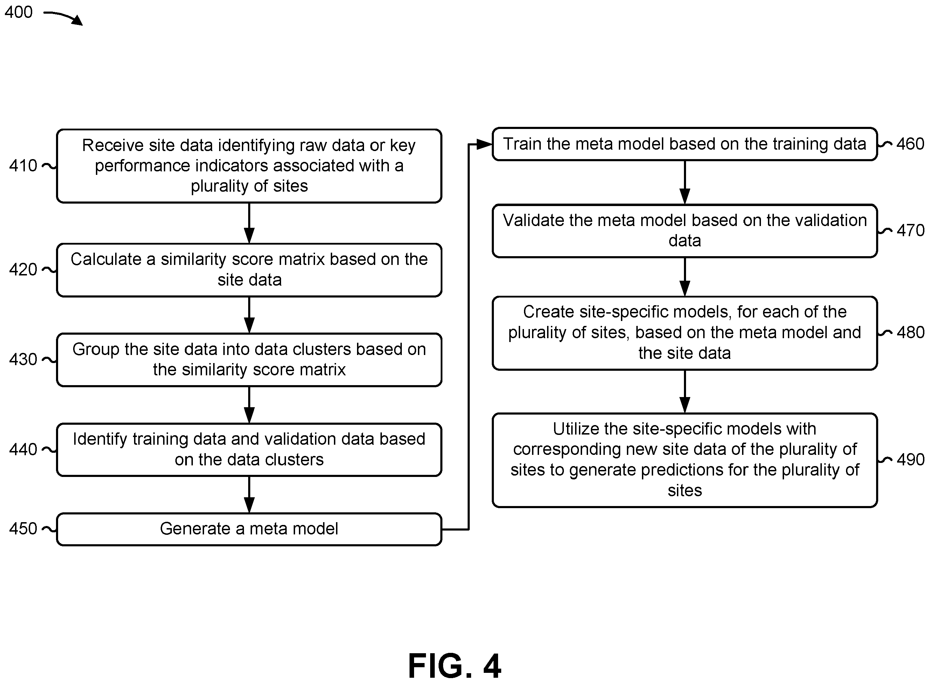

Fig. 4 is a flowchart of an example process 400 for hierarchical multi-model generation in network and cloud computing systems. In some implementations, one or more process blocks of Fig. 4 may be performed by a device (e.g., the model generation system 201). In some implementations, one or more process blocks of Fig. 4 may be performed by another device or a group of devices separate from or including the device. Additionally, or alternatively, one or more process blocks of Fig. 4 may be performed by one or more components of the device 300, such as the processor 320, the memory 330, the input component 340, the output component 350, and/or the communication interface 360.

As shown in Fig. 4, process 400 may include receiving site data identifying raw data or key performance indicators associated with a plurality of sites (block 410). For example, the device may receive site data identifying raw data or key performance indicators associated with a plurality of sites, as described above. In some implementations, each of the plurality of sites includes one or more server devices, one or more network devices, or one or more data structures. In some implementations, each of the plurality of sites includes multiple virtual machines.

As further shown in Fig. 4, process 400 may include calculating a similarity score matrix based on the site data (block 420). For example, the device may calculate a similarity score matrix based on the site data, as described above. In some implementations, the similarity score matrix is a Jensen-Shannon score matrix. In some implementations, the similarity score matrix provides an indication of similar data distributions associated with the site data.

As further shown in Fig. 4, process 400 may include grouping the site data into data clusters based on the similarity score matrix (block 430). For example, the device may group the site data into data clusters based on the similarity score matrix, as described above. In some implementations, grouping the site data into data clusters based on the similarity score matrix includes grouping the site data into hierarchical data clusters based on the similarity score matrix.

As further shown in Fig. 4, process 400 may include identifying training data and validation data based on the data clusters (block 440). For example, the device may identify training data and validation data based on the data clusters, as described above.

As further shown in Fig. 4, process 400 may include generating a meta model (block 450). For example, the device may generate a meta model, as described above. In some implementations, the meta model is a neural network model.

As further shown in Fig. 4, process 400 may include training the meta model based on the training data (block 460). For example, the device may train the meta model based on the training data, as described above. In some implementations, training the meta model based on the training data includes training the meta model based on the training data and a model agnostic meta learning model. In some implementations, training the meta model based on the training data includes training the meta model, based on the training data, to generate site-specific weights to be tuned to create the site-specific models.

As further shown in Fig. 4, process 400 may include validating the meta model based on the validation data (block 470). For example, the device may validate the meta model based on the validation data, as described above.

As further shown in Fig. 4, process 400 may include creating site-specific models, for each of the plurality of sites, based on the meta model and the site data (block 480). For example, the device may create site-specific models, for each of the plurality of sites, based on the meta model and the site data, as described above. In some implementations, creating the site-specific models, for each of the plurality of sites, based on the meta model and the site data includes creating the site-specific models based on training the meta model with the training data, calculating losses associated with the site-specific models, utilizing the losses to learn gradients, and updating the meta model based on the gradients. In some implementations, each of the site-specific models learns with less data than required for models not generated based on the meta model.

As further shown in Fig. 4, process 400 may include utilizing the site-specific models with corresponding new site data of the plurality of sites to generate predictions for the plurality of sites (block 490). For example, the device may utilize the site-specific models with corresponding new site data of the plurality of sites to generate predictions for the plurality of sites, as described above.

In some implementations, process 400 includes creating a base model for a new site based on the meta model, receiving new site data from the new site, and utilizing the base model and the new site data to generate predictions for the new site. In some implementations, the base model is a generic model generated from the meta model.

Although Fig. 4 shows example blocks of process 400, in some implementations, process 400 may include additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description but is not intended to be exhaustive or to limit the implementations to the precise form disclosed. Modifications may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

A computer readable medium may include non-transitory type media such as physical storage media including storage discs and solid state devices. A computer readable medium may also or alternatively include transient media such as carrier signals and transmission media. A computer-readable storage medium is defined herein as a non-transitory memory device. A memory device includes memory space within a single physical storage device or memory space spread across multiple physical storage devices.

Although particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set.

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

In the preceding specification, various example embodiments have been described with reference to the accompanying drawings. It will, however, be evident that various modifications and changes may be made thereto, and additional embodiments may be implemented, without departing from the broader scope of the invention as set forth in the claims that follow. The specification and drawings are accordingly to be regarded in an illustrative rather than restrictive sense.

Thus, from one perspective, there has now been described a device that may receive site data identifying raw data or key performance indicators associated with a plurality of sites, and may calculate a similarity score matrix based on the site data. The device may group the site data into data clusters based on the similarity score matrix, and may identify training data and validation data based on the data clusters. The device may generate a meta model, and may train the meta model based on the training data. The device may validate the meta model based on the validation data, and may create site-specific models, for each of the plurality of sites, based on the meta model and the site data. The device may utilize the site-specific models with corresponding new site data of the plurality of sites to generate predictions for the plurality of sites.

Further examples of feature combinations taught by the present disclosure are set out in the following numbered clauses:
1. A method, comprising:
   receiving, by a device, site data identifying raw data or key performance indicators associated with a plurality of sites;
   calculating, by the device, a similarity score matrix based on the site data;
   grouping, by the device, the site data into data clusters based on the similarity score matrix;
   identifying, by the device, training data and validation data based on the data clusters;
   generating, by the device, a meta model;
   training, by the device, the meta model based on the training data;
   validating, by the device, the meta model based on the validation data;
   creating, by the device, site-specific models, for each of the plurality of sites, based on the meta model and the site data; and
   utilizing, by the device, the site-specific models with corresponding new site data of the plurality of sites to generate predictions for the plurality of sites.
2. The method of clause 1, wherein the similarity score matrix is a Jensen-Shannon score matrix.
3. The method of clause 1 or 2, further comprising:
   creating a base model for a new site based on the meta model;
   receiving new site data from the new site; and
   utilizing the base model and the new site data to generate predictions for the new site.
4. The method of clause 3, wherein the base model is a generic model generated from the meta model.
5. The method of any preceding clause, wherein each of the plurality of sites includes:
   one or more server devices,
   one or more network devices, or
   one or more data structures.
6. The method of any preceding clause, wherein the similarity score matrix provides an indication of similar data distributions associated with the site data.
7. The method of any preceding clause, wherein grouping the site data into data clusters based on the similarity score matrix comprises:
   grouping the site data into hierarchical data clusters based on the similarity score matrix.
8. A device, comprising:
   one or more memories; and
   one or more processors to:
      receive site data identifying raw data or key performance indicators associated with a plurality of sites;
      calculate a similarity score matrix based on the site data,
         wherein the similarity score matrix provides an indication of similar data distributions associated with the site data;
      group the site data into data clusters based on the similarity score matrix;
      identify training data and validation data based on the data clusters;
      generate a meta model;
      train the meta model based on the training data;
      validate the meta model based on the validation data;
      create site-specific models, for each of the plurality of sites, based on the meta model and the site data; and
      utilize the site-specific models with corresponding new site data of the plurality of sites to generate predictions for the plurality of sites.
9. The device of clause 8, wherein the meta model is a neural network model.
10. The device of clause 8 or 9, wherein the one or more processors, to train the meta model based on the training data, are to:
   train the meta model based on the training data and a model agnostic meta learning model.
11. The device of any of clauses 8 to 10, wherein the one or more processors, to train the meta model based on the training data, are to:
   train the meta model, based on the training data, to generate site-specific weights to be tuned to create the site-specific models.
12. The device of any of clauses 8 to 11, wherein the one or more processors, to create the site-specific models, for each of the plurality of sites, based on the meta model and the site data, are to:
   create the site-specific models based on training the meta model with the training data;
   calculate losses associated with the site-specific models;
   utilize the losses to learn gradients; and
   update the meta model based on the gradients.
13. The device of any of clauses 8 to 12, wherein each of the site-specific models learns with less data than required for models not generated based on the meta model.
14. The device of any of clauses 8 to 13, wherein each of the plurality of sites includes multiple virtual machines.
15. A computer-readable medium comprising computer-implementable instructions that, when executed by one or more processors of a device, cause the device to:
   receive site data identifying raw data or key performance indicators associated with a plurality of sites,
      wherein each of the plurality of sites includes one or more server devices, one or more network devices, or one or more data structures;
   calculate a similarity score matrix based on the site data;
   group the site data into data clusters based on the similarity score matrix;
   identify training data based on the data clusters;
   generate a meta model;
   train the meta model based on the training data;
   create site-specific models, for each of the plurality of sites, based on the meta model and the site data; and
   utilize the site-specific models with corresponding new site data of the plurality of sites to generate predictions for the plurality of sites.
16. The computer-readable medium of clause 15, wherein the one or more instructions further cause the device to:
   create a base model for a new site based on the meta model,
      wherein the base model is a generic model generated from the meta model;
   receive new site data from the new site; and
   utilize the base model and the new site data to generate predictions for the new site.
17. The computer-readable medium of clause 15 or 16, wherein the one or more instructions, that cause the device to group the site data into data clusters based on the similarity score matrix, cause the device to:
   group the site data into hierarchical data clusters based on the similarity score matrix.
18. The computer-readable medium of any of clauses 15 to 17, wherein the one or more instructions, that cause the device to train the meta model based on the training data, cause the device to:
   train the meta model based on the training data and a model agnostic meta learning model.
19. The computer-readable medium of any of clauses 15 to 18, wherein the one or more instructions, that cause the device to train the meta model based on the training data, cause the device to:
   train the meta model, based on the training data, to generate site-specific weights to be tuned to create the site-specific models.
20. The computer-readable medium of any of clauses 15 to 19, wherein the one or more instructions, that cause the device to create the site-specific models, for each of the plurality of sites, based on the meta model and the site data, cause the device to:
   create the site-specific models based on training the meta model with the training data;
   calculate losses associated with the site-specific models;
   utilize the losses to learn gradients; and
   update the meta model based on the gradients.

## Claims

1. A method, comprising:
receiving, by a device, site data identifying raw data or key performance indicators associated with a plurality of sites;
calculating, by the device, a similarity score matrix based on the site data;
grouping, by the device, the site data into data clusters based on the similarity score matrix;
identifying, by the device, training data and validation data based on the data clusters;
generating, by the device, a meta model;
training, by the device, the meta model based on the training data;
validating, by the device, the meta model based on the validation data;
creating, by the device, site-specific models, for each of the plurality of sites, based on the meta model and the site data; and
utilizing, by the device, the site-specific models with corresponding new site data of the plurality of sites to generate predictions for the plurality of sites.

2. The method of claim 1, wherein the similarity score matrix is a Jensen-Shannon score matrix.

3. The method of claim 1 or 2, further comprising:
creating a base model for a new site based on the meta model;
receiving new site data from the new site; and
utilizing the base model and the new site data to generate predictions for the new site.

4. The method of claim 3, wherein the base model is a generic model generated from the meta model.

5. The method of any preceding claim, wherein each of the plurality of sites includes:
one or more server devices,
one or more network devices, or
one or more data structures.

6. The method of any preceding claim, wherein the similarity score matrix provides an indication of similar data distributions associated with the site data.

7. The method of any preceding claim, wherein grouping the site data into data clusters based on the similarity score matrix comprises:
grouping the site data into hierarchical data clusters based on the similarity score matrix.

8. A device, comprising:
one or more memories; and
one or more processors to:
receive site data identifying raw data or key performance indicators associated with a plurality of sites;
calculate a similarity score matrix based on the site data,
wherein the similarity score matrix provides an indication of similar data distributions associated with the site data;
group the site data into data clusters based on the similarity score matrix;
identify training data and validation data based on the data clusters;
generate a meta model;
train the meta model based on the training data;
validate the meta model based on the validation data;
create site-specific models, for each of the plurality of sites, based on the meta model and the site data; and
utilize the site-specific models with corresponding new site data of the plurality of sites to generate predictions for the plurality of sites.

9. The device of claim 8, wherein the meta model is a neural network model.

10. The device of claim 8 or 9, wherein the one or more processors, to train the meta model based on the training data, are to:
train the meta model based on the training data and a model agnostic meta learning model.

11. The device of any of claims 8 to 10, wherein the one or more processors, to train the meta model based on the training data, are to:
train the meta model, based on the training data, to generate site-specific weights to be tuned to create the site-specific models.

12. The device of any of claims 8 to 11, wherein the one or more processors, to create the site-specific models, for each of the plurality of sites, based on the meta model and the site data, are to:
create the site-specific models based on training the meta model with the training data;
calculate losses associated with the site-specific models;
utilize the losses to learn gradients; and
update the meta model based on the gradients.

13. The device of any of claims 8 to 12, wherein each of the site-specific models learns with less data than required for models not generated based on the meta model.

14. The device of any of claims 8 to 13, wherein each of the plurality of sites includes multiple virtual machines.

15. A computer-readable medium comprising computer-implementable instructions that, when executed by one or more processors of a device, cause the device to:
receive site data identifying raw data or key performance indicators associated with a plurality of sites,
wherein each of the plurality of sites includes one or more server devices, one or more network devices, or one or more data structures;
calculate a similarity score matrix based on the site data;
group the site data into data clusters based on the similarity score matrix;
identify training data based on the data clusters;
generate a meta model;
train the meta model based on the training data;
create site-specific models, for each of the plurality of sites, based on the meta model and the site data; and
utilize the site-specific models with corresponding new site data of the plurality of sites to generate predictions for the plurality of sites.
